# FASCICULE DE BREVET EUROPEEN

(11) **EP 1 229 325 B1**
(45) Date de publication et mention de la délivrance du brevet: **07.10.2015**
(21) Numéro de dépôt: 02290138.3
(22) Date de dépôt: 18.01.2002
(51) Int. Cl.: G01N 27/447

(54) **Procédé de séparation de protéines par électrophorèse capillaire et compositions de tampon pour électrophorèse capillaire**
Verfahren zur Trennung von Proteinen durch Kapillarelektrophorese und Pufferzusammensetzungen für Kapillarelektrophorese
Method for separating proteins by capillary electrophoresis and buffer compositions for capillary electrophoresis

(30) Priorité: 19.01.2001 FR 0100762
(43) Date de publication de la demande: 07.08.2002
(73) Titulaire: SEBIA, 91090 Lisses (FR)
(72) Inventeur: Nouadje, Georges, 91000 Evry (FR); Robert, Frédéric, 91540 Mennecy (FR)
(74) Mandataire: Desaix, Anne

(56) Documents cités:
- EP-A- 0 518 475
- WO-A-00/70334
- JP-A- H0 212 059
- US-A- 4 769 408
- US-A- 5 599 433
- US-A- 5 928 484
- US-A- 5 938 930

## Description

La présente invention concerne un procédé pour la séparation de protéines et peptides par électrophorèse capillaire ainsi que des compositions de tampon comportant un additif utile pour cette séparation.

Il est connu d'analyser le taux des protéines dans des liquides biologiques comme du sérum, avec des visées analytiques et notamment diagnostiques, et usuellement de séparer des protéines par électrophorèse, tant en électrophorèse sur gel qu'en électrophorèse capillaire.

En électrophorèse sur gel, US 5 928 484 décrit la séparation spécifique de la Lpa des autres lipoprotéines à l'aide de composés anioniques ou cationiques.

L'un des intérêts de l'électrophorèse capillaire réside dans le fait que de très petites quantités des liquides biologiques à analyser sont nécessaires. De plus la séparation par cette technique peut être très rapide, dans la mesure où de forts voltages peuvent être utilisés sans que l'échantillon ne s'échauffe trop lors de la séparation.

Pour la séparation des protéines sériques, on effectue classiquement l'électrophorèse capillaire avec des tampons alcalins. Usuellement, les profils protéiques obtenus comportent cinq ou six fractions que sont la fraction albumine, les fractions α₁- et α₂-globuline, la fraction β-globuline ou les fractions β₁- et β₂-globuline et la fraction γ-globuline.

De telles séparations peuvent être faites, en électrophorèse capillaire, notamment, à l'aide de tampons d'analyse et techniques tels que décrits aux brevets US Re 36 011 ou EP 518 475.

Jusqu'ici, en électrophorèse capillaire notamment, la séparation de l'albumine et de l'α₁-globuline est toutefois insatisfaisante.

US 5 536 382 décrit une méthode d'analyse de constituants d'échantillons biologiques, notamment des échantillons sanguins préalablement mélangé à un réactif marqué spécifique. L'analyse d'une hémoglobine glyquée est décrite, cette analyse étant précédée de l'étape de marquage et d'incubation avec un anticorps marqué spécifique de l'hémoglobine humaine A1C.

La demanderesse a maintenant mis en évidence qu'en utilisant un additif au tampon d'analyse, additif comportant un pôle anionique quand le pH est supérieur à 9 et une partie hydrophobe, il était possible d'obtenir une séparation améliorée, notamment la séparation albumine/α₁-globuline. Ces additifs sont capables d'une part d'interactions hydrophobes avec un ou plusieurs constituants protéiques et d'autre part capables d'apporter à ce ou ces constituants protéiques une ou plusieurs charges négatives et d'en modifier la mobilité électrophorétique.

Ainsi l'invention concerne un procédé d'électrophorèse capillaire en solution libre à pH alcalin pour l'analyse d'échantillons comportant des constituants protéiques tel que défini par la revendication 1 et, dans lequel on introduit l'échantillon dans un tube capillaire contenant un tampon d'analyse, ledit tampon d'analyse comportant en outre au moins un additif capable d'interaction hydrophobe avec un ou plusieurs constituants protéiques et capable d'apporter à ce ou ces constituants protéiques une ou plusieurs charges négatives et d'en modifier la mobilité électrophorétique. Cette étape est en général suivie de la séparation des constituants protéiques par migration et détection des constituants.

L'invention concerne également un procédé de séparation par électrophorèse des constituants protéiques d'échantillons comportant de l'albumine et les fractions α₁- ; α₂- ; β- (ou β₁- et β₂-); et γ-globuliné, dans un tampon d'analyse, dans lequel le tampon d'analyse comporte un additif en outre au moins capable d'interaction hydrophobe avec l'albumine.

La présente invention concerne également un procédé de séparation électrophorétique, par électrophorèse capillaire à pH alcalin en solution libre, des constituants protéiques d'un échantillon liquide, procédé dans lequel on fait passer l'échantillon comportant lesdits constituants dans un capillaire contenant un tampon d'analyse comportant en outre au moins un additif, l'additif étant un composé comportant un pôle anionique quand le pH est supérieur à 9 et une partie hydrophobe.

Ainsi, les composés utiles comme additif pour tampon d'analyse en électrophorèse capillaire de l'invention sont notamment capables d'interaction hydrophobe avec l'albumine ; ces composés peuvent être par exemple des surfactants anioniques tels que ceux utilisés en MECC (Micellar Electrokinetic Capillary Chromatography), mais à une concentration inférieure à leur concentration micellaire critique. Dans la présente invention, nous utilisons ces composés en EC en solution libre : il y a apport de charges négatives sur l'albumine par interaction hydrophobe entre les résidus hydrophobes de l'albumine et la partie hydrophobe de ces composés, d'où une diminution de la mobilité de l'albumine par rapport à celle des autres protéines. Une des conséquences est la séparation améliorée de l'albumine et de la fraction α₁.

Enfin, l'invention concerne des compositions d'électrolyte pour l'électrophorèse capillaire telles que définies par la revendication 18 et comportant au moins un tampon et un additif capable d'interaction hydrophobe avec l'albumine, dans un support acceptable.

Comme cela apparaît dans les exemples, l'utilisation d'additifs selon l'invention permet une séparation améliorée des fractions albumine et α₁-globuline. Elle permet en outre un meilleur retour à la ligne de base entre ces deux fractions qu'avec les tampons usuels.

D'autres caractéristiques et avantages de l'invention apparaîtront à la lecture de la description détaillée, des exemples et figures annexées.
La figure 1 représente un électrophérogramme d'un sérum humain normal analysé par électrophorèse capillaire en utilisant un tampon glycine.
La figure 2 représente un électrophérogramme d'un sérum humain normal analysé par électrophorèse capillaire en utilisant le même tampon glycine avec un additif selon l'invention.
La figure 3 représente un électrophérogramme d'un sérum humain normal analysé par électrophorèse capillaire en utilisant un tampon borate.
La figure 4 représente un électrophérogramme d'un sérum humain normal analysé par électrophorèse capillaire en utilisant le même tampon borate avec un additif selon l'invention.
La figure 5 représente un électrophérogramme d'un sérum humain normal, obtenu par électrophorèse sur gel d'agarose.
La figure 6 représente un électrophérogramme d'un sérum d'un patient présentant un syndrome inflammatoire aigu, réalisé en électrophorèse capillaire avec un tampon glycine.
La figure 7 représente un électrophérogramme d'un sérum d'un patient présentant un syndrome inflammatoire aigu réalisé en électrophorèse capillaire en utilisant le même tampon glycine avec un additif selon l'invention.
La figure 8 représente un électrophérogramme d'un sérum d'un patient présentant un syndrome inflammatoire aigu réalisé en électrophorèse capillaire avec un tampon borate.
La figure 9 représente un électrophérogramme d'un sérum d'un patient présentant un syndrome inflammatoire aigu réalisé en électrophorèse capillaire en utilisant le même tampon borate avec un additif selon l'invention.
La figure 10 représente un électrophérogramme du sérum d'un patient présentant un syndrome inflammatoire aigu, obtenu par électrophorèse sur gel d'agarose.
La figure 11 illustre pour diverses longueurs de la chaîne carbonée d'un alkylsulfonate additionné à un tampon borate usuel, la mobilité de la fraction α₁-globuline et celle de la fraction albumine.

A titre d'additif pour tampon utile selon l'invention et capable d'interaction avec la partie hydrophobe de l'albumine on peut citer les composés comportant un pôle anionique quand le pH est supérieur à 9 et une partie hydrophobe. La partie hydrophobe peut être composée d'au moins une chaîne alkyle, ramifiée ou non, de 4 à 22 atomes de carbone, notamment 4 à 20 atomes de carbone, et/ou d'au moins une combinaison de 1 à 10 cycles, aromatiques ou non. On préfère des combinaisons de 1 à 4 cycles. Comme cela sera facilement compris du spécialiste, cette partie hydrophobe pourra comporter des résidus ou fonctions qui ne modifient pas essentiellement son caractère hydrophobe, comme un ou plusieurs groupements hydroxy ou amine, par exemple.

Le pôle anionique peut être constitué par un ou plusieurs des groupes ou fonctions chimiques de la liste suivante : sulfonates, carboxylates, sulfates, phosphates, carbonates.

On peut ainsi citer notamment les surfactants anioniques du type cholate, les C₆-C₂₂-alkyl-mono-, di- ou tri-alkylsufonates, le tétradécènesulfonate, les naphtalènesulfonates, les C₆-C₂₂-alkyl-mono-, di- ou tri- carboxylates, les C₆-C₂₂ alkylcarboxysulfonates, les naphtalènecarboxylates, les C₄ à C₁₄ alkylsulfates, les C₄ à C₁₄-alkylcarbonates, les benzènesulfonates et les benzènecarboxylates.

Les di- et tri-carboxylates, di- et tri-sulfonates et carboxysulfonates ci-dessus sont ainsi des combinaisons de une ou plusieurs fonctions carboxylates ou sulfonates sur des chaînes alkyles de 6 à 22 atomes de carbone. A titre d'exemple non limitatif, on peut citer l'acide 1,2,3-nonadécanetricarboxylique qui comporte trois fonctions carboxylates et une chaîne en C₁₉, l'acide 2-méthyl-2-sulfooctadecanoique qui comporte une fonction carboxylate et une fonction sulfonate et une chaîne en C₁₈, et l'acide 1,12-dodécanedicarboxylique qui comporte deux fonctions carboxylate et une chaîne en C₁₂.

Plus précisément, on peut citer les C₆ à C₁₀-alkylsulfonates parmi les C₆-C₂₂-alkyl-mono-, di- ou tri-alkylsufonates et les C₆ à C₁₄ alkylcarboxylates parmi les C₆-C₂₂-alkyl-mono-, di- ou tri- carboxylates.

Dans les dénominations ci-dessus, les radicaux alkyle sont de préférence linéaires.

Des tampons biologiques sont utilisables comme additif selon l'invention. On peut citer notamment les tampons zwitterioniques du type Good comme le CAPS (acide 3-cyclohexylamino-1-propane-sulfonique) et le CHES (acide 2-(N-cyclohexylamino)éthanesulfonique).

D'autres tampons biologiques zwitterioniques sont utilisables selon l'invention. Les tampons acide aminés ne sont toutefois pas considérés comme faisant partie de la présente invention.

Parmi les additifs cités ci-dessus, on préfère les C₆ à C₁₀ alkylsulfonates et parmi les C₆ à C₁₀ alkylsulfonates, on préfère particulièrement l'octanesulfonate.

Ces composés sont connus en soi et disponibles dans le commerce. Ils peuvent être sous forme acide ou sous forme de sels.

Par échantillon selon l'invention, on entend l'échantillon biologique à analyser, préalablement dilué avec une solution de dilution appropriée ou du tampon d'analyse, par exemple, ou pur.

Comme échantillon, on peut analyser tout liquide biologique de patients sains ou malades. Ainsi, les liquides biologiques humains peuvent être du sérum normal ou pas, et aussi du sang hémolysé, du plasma, de l'urine ou du fluide cérébro-spinal. Outre les échantillons biologiques humains, on peut analyser des échantillons d'origine animale. Les échantillons peuvent aussi être des protéines synthétiques, et le procédé de l'invention peut alors avoir des visées de contrôle de production par exemple.

Les additifs selon l'invention sont particulièrement utiles pour les analyses de sérum, et la séparation de protéines sériques, dans des échantillons humains.

Dans les échantillons de sérum, les protéines sériques à séparer sont l'albumine et les fractions α₁- ; α₂- ; β (ou β₁- et β₂-) : et γ-globuline.

A titre de tampon d'analyse, on peut utiliser tout tampon d'analyse connu, adapté à la séparation souhaitée, et utile en électrophorèse en général, et en électrophorèse capillaire en particulier. A titre d'exemples, on peut citer les tampons borate, phosphate et carbonate, les tampons à base d'acide aminé et les tampons dits biologiques.

Comme tampon biologique, on peut citer les tampons connus sous les noms de Bis-TRIS (2-bis[2-hydroxyéthyl]amino-2-hydroxyméthyl-1,3-propanediol), ADA (acide N-[2-acétamido]-2-iminodiacétique), ACES (acide 2-[2-acétamino]-2-aminoéthanesulfonique), PIPES (acide 1,4-pipérazinediéthanesulfonique), MOPSO (acide 3-[N-morpholino]-2-hydroxypropanesulfonique), Bis-TRIS PROPANE (1,3-bis[tris(Hydroxyméthyl)méthylaminolpropane]), BES (acide N,N-bis[2hydroxyéthyl]-2-aminoéthanesulfonique), MOPS (acide 3-[N-morpholino]propanesulfonique), TES (acide 2-[2-hydroxy-1,1-bis(hydroxyméthyl)éthylamino]éthanesulfonique), HEPES (acide N-[2-hydroéthyl]piperazine-N'-(2-éthanesulfonique)), DIPSO (acide 3-N,N-bis[2 hydroxyéthyl]amino-2-hydroxypropanesulfonique), MOBS (acide 4-N-morpholinobutanesulfonique), TAPSO (acide 3[N-tris-hydroxyméthyl-méthylamino]-2-hydroxypropane sulfonique), TRIS (2-amino-2-[hydroxyméthyl]-1,3-propanediol), HEPPSO (acide N-[2-hydroxyéthyl]piperazine-N'-[2-hydroxypropanesulfonique]), POPSO (acide piperazine-N,N'-bis[2-hydroxypropanesulfonique], TEA (triéthanolamine), EPPS (acide N-[2-hydroxyéthyl]-piperazine-N'-[3-propane-sulfonique]), TRICINE (N-tris[hydroxyméthyl]méthylglycine), GLY-GLY (diglycine), BICINE (N,N-bis[2-hydroxyéthyl]-glycine), HEPBS (acide N-[2-hydroxyéthyl]piperazine-N'-[4-butanesulfonique]), TAPS (acide N-tris[hydroxyméthyl]méthyl-3-aminopropanesulfonique), AMPD (2-amino-2-méthyl-1,3-promanediol), TABS (acide N-tris[hydroxyméthyl]méthyl-4-amino butane sulfonique), AMPSO (acide 3-[(1,1-diméthyl-2-hydroxyéthyl)amino]-2-hydroxypropanesulfonique), CHES (acide 2-(N-cyclohexylamino)éthanesulfonique), CAPSO (acide 3-[cyclohexylamino]-2-hydroxy-1-propanesulfonique), AMP (2-amino-2-méthyl-1-propanol), CAPS (acide 3-cyclohexylamino-1-propane-sulfonique) ou CABS (acide 4-[cyclohexylamino]-1-butanesulfonique), de préférence AMPD, TABS, AMPSO, CHES, CAPSO, AMP, CAPS ou CABS.

Du point de vue du pH du liquide biologique dans le tampon d'analyse, y compris l'additif, celui-ci peut varier entre 2 et 12. Néanmoins, en électrophorèse capillaire à pH alcalin, le pH est compris entre 8 et 12. Selon l'invention, le pH est compris entre 9 et 11, et, de façon plus particulièrement préférée a une valeur d'environ 10.

Les tampons d'analyse selon l'invention peuvent en outre comporter au moins un composé modifiant le pH. A titre de modificateur de pH, on peut utiliser un composé choisi parmi l'hydroxyde de lithium, l'hydroxyde de sodium, l'hydroxyde de potassium, l'hydroxyde de rubidium, l'hydroxyde de césium, l'hydroxyde de francium, un hydroxyde de mono-, di-, tri- ou tétra-alkyl ammonium ayant de 1 à 8 atomes de carbone dans la partie alkyle.

Selon l'invention, les tampons d'analyse sont utilisés dans les conditions et concentrations usuelles, à savoir de l'ordre de 10 à 500 mM, de préférence 20 à 400 mM.

Les additifs selon l'invention sont utilisés dans des concentrations allant de 0,1 mM à 500 mM, sans toutefois excéder leur concentration micellaire critique dans le tampon d'analyse.

Cette valeur de concentration micellaire critique intervient pour les additifs qui sont des surfactants.

Lorsque l'octanesulfonate est utilisé, sa concentration dans le tampon est de l'ordre de 1 à 5 mM, et de préférence 1 à 4 mM. De façon préférée, la concentration peut être d'environ 2,5 mM.

Dans les procédés de l'invention, le tampon d'analyse peut en outre comporter du sulfate de sodium.

Les compositions de tampon de l'invention sont préparées de façon usuelle pour des compositions de tampon d'analyse, à savoir par adjonction des constituants sous forme liquide, ou solide à diluer, à un support acceptable. De façon usuelle, le support est de l'eau, distillée ou déminéralisée.

Du point de vue des matériaux utilisés pour les capillaires, ceux-ci sont usuels en électrophorèse capillaire. Ainsi, on peut utiliser des capillaires de silice fondue. Leur diamètre interne peut aller de 5 à 2 000 µm. De façon préférée, on utilise selon l'invention des capillaires de diamètre interne inférieur à 200 µm, de préférence inférieur à 100 µm. On utilise de préférence des capillaires à surface intérieure non traitée. Le spécialiste saura adapter la nature du capillaire et sa taille aux besoins de l'analyse.

### Exemples

### MATERIEL ET METHODES

### A) Electrophorèse capillaire (méthode A)

L'électrophorèse capillaire d'échantillons cliniques est réalisée sur un appareil d'EC équipé d'un capillaire en silice fondue de diamètre interne 25 microns. La détection est réalisée à 200 nm. Les échantillons sont placés dans le passeur d'échantillons de l'appareil et injectés automatiquement par injection hydrodynamique (50 mbars pendant 7 s). La séparation des échantillons est réalisée en moins de 10 minutes en appliquant un champ électrique d'environ 400 V/cm. Le capillaire est lavé avant chaque analyse par la soude 0,5 M, puis par le tampon d'analyse.

### Tampons d'analyse :

Les produits chimiques utilisés sont de grade analytique.

Le tampon glycine 150 mM est préparé en dissolvant 11,26 g de glycine (masse molaire 75,07 g/mol) dans 1 I d'eau déminéralisée. La concentration finale est de 150 mM et le pH est ajusté à 10,0 par addition de pastilles de soude (masse molaire : 40,0 g/mol).

Le tampon borate 150 mM est préparé en dissolvant 9,3 g d'acide borique (masse molaire : 61,83 g/mol) dans 1 I d'eau déminéralisée, et 5,1 g de soude (masse molaire : 40,0 g/mol). La concentration finale est de 150 mM et le pH de 10,0.

### B) Electrophorèse sur gel d'agarose (méthode B)

L'analyse comparative de protéines sériques est réalisée sur gel d'agarose. 10 µL de sérum ont été chargés dans chaque puits de l'applicateur à membrane décrit dans les brevets EP 0 493 996, US 5,464,515, US 5,405,516. L'applicateur ainsi chargé a ensuite été appliqué à la surface d'un gel d'agarose pendant 30 s. La séparation de ces échantillons appliqués sur ce gel d'agarose a été obtenue par électrophorèse pendant 7,5 minutes environ et à une puissance de 20 W, sur un instrument permettant de réguler la température à 20°C. Après migration, le gel a été séché et coloré à l'amidoschwarz. Après coloration, le gel est décoloré et séché à nouveau. Les gels sont alors analysés par densitométrie ce qui permet d'obtenir les profils protéiques.

### C) Echantillons cliniques :

Pour l'EC, les sérums humains sont dilués au 1/10^{ème} dans le tampon d'analyse.

### Exemple 1 (comparatif)

Un tampon d'analyse glycine est préparé comme ci-dessus. On a analysé du sérum normal.

L'électrophorèse a été réalisée selon la méthode A ci-dessus.

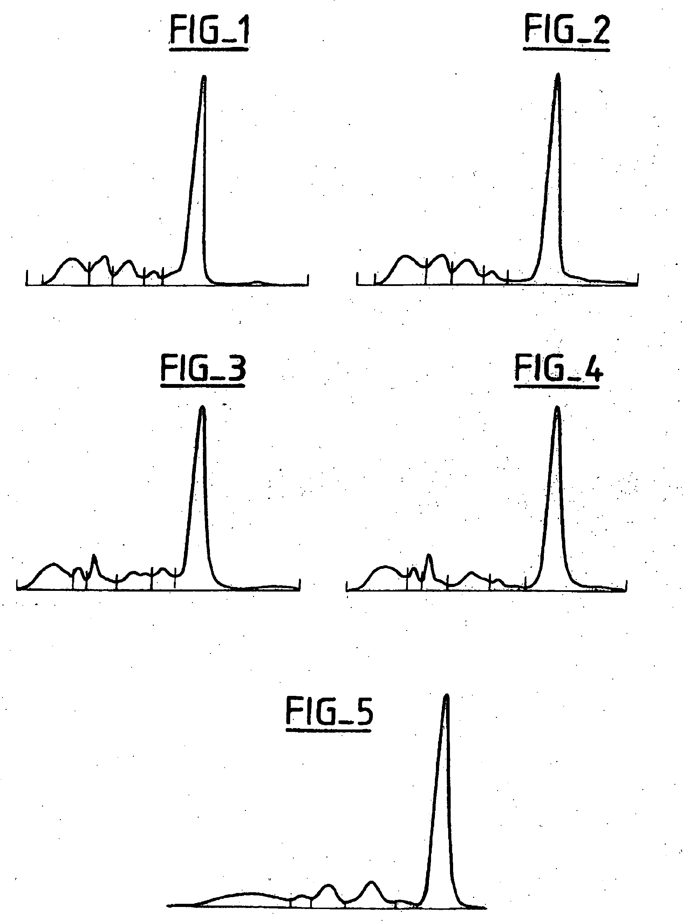

Comme cela apparaît sur la figure 1, l'électrophérogramme obtenu présente, de gauche à droite, cinq pics successifs attribués respectivement aux fractions γ, β, α₂, α₁-globuline et albumine.

### Exemple 2

Au tampon d'analyse de l'exemple 1, on ajoute de l'octanesulfonate à une concentration de 2,5 mM.

L'électrophorèse a été réalisée comme à l'exemple 1.

Comme cela apparaît sur la figure 2, l'électrophérogramme obtenu présente, de gauche à droite, cinq pics successifs attribués respectivement aux fractions γ, β, α₂, α₁-globuline et albumine. Par comparaison avec le résultat de l'exemple 1, la séparation entre les deux fractions α₁-globuline et albumine est nettement améliorée et le retour à la ligne de base est meilleur.

### Exemple 3 (comparatif)

On opère comme à l'exemple 1, le tampon d'analyse utilisé étant un tampon borate préparé comme indiqué ci-dessus.

L'électrophorèse a été réalisée comme à l'exemple 1.

Comme cela apparaît sur la figure 3 l'électrophérogramme obtenu présente, de gauche à droite, six pics successifs attribués respectivement aux fractions γ-, β₂-, β₁-, α₂-, α₁-globuline et albumine.

### Exemple 4

Au tampon de l'exemple 3, on ajoute de l'octanesulfonate à une concentration de 2,5 mM.

L'électrophorèse a été réalisée comme à l'exemple 1.

Comme cela apparaît sur la figure 4, l'électrophérogramme obtenu présente, de gauche à droite, six pics successifs attribués respectivement aux fractions γ, β₂, β₁, α₂, α₁-globuline et albumine. La séparation entre les deux fractions α₁- et albumine est nettement améliorée et le retour à la ligne de base est meilleur.

### Exemple 5 (comparatif)

On obtient l'électrophérogramme de la figure 5 en analysant le même sérum qu'aux exemples précédents par la méthode B ci-dessus. Par comparaison avec le résultat obtenu aux exemples 2 et 4, on constate que ces modes de réalisation permettent d'obtenir une résolution pratiquement comparable à la résolution obtenue sur gel d'agarose.

### Exemple 6 (comparatif)

Un tampon d'analyse glycine 150 mM a été préparé.

Du sérum à fortes α₁- et α₂-globulines a été analysé. L'électrophorèse a été réalisée comme à l'exemple 1.

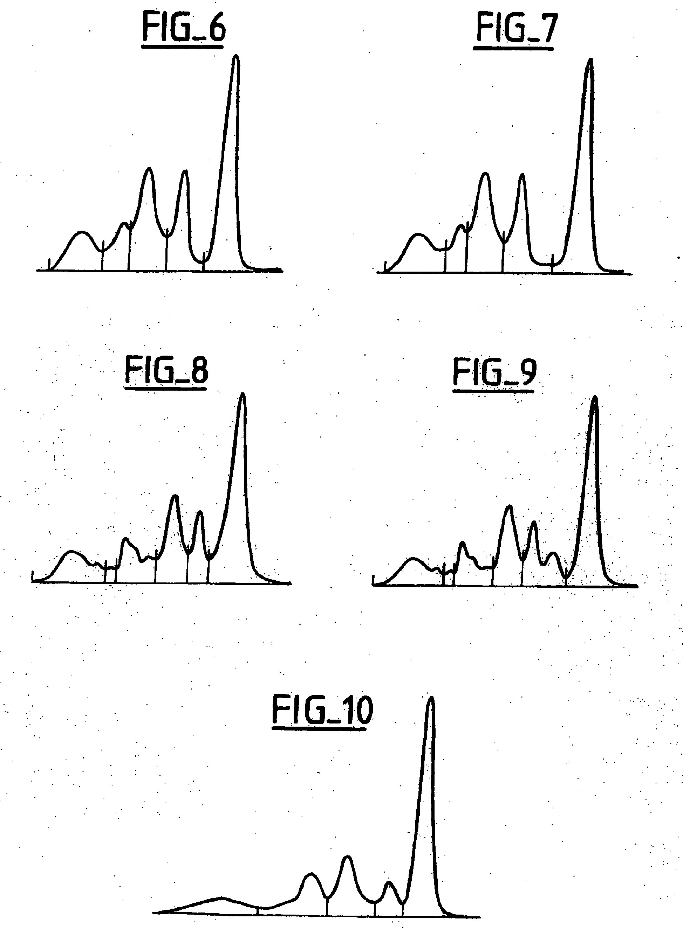

Comme cela apparaît sur la figure 6, l'électrophérogramme obtenu présente, de gauche à droite, cinq pics successifs attribués respectivement aux fractions γ, β, α₂, α₁-globuline et albumine.

### Exemple 7

Au tampon d'analyse de l'exemple 6, on ajoute de l'octanesulfonate à une concentration de 2,5mM.

L'électrophorèse a été réalisée comme à l'exemple 6.

Comme cela apparaît sur la figure 7, l'électrophérogramme obtenu présente, de gauche à droite, cinq pics successifs attribués respectivement aux fractions γ, β, α₂, α₁-globuline et albumine. Par comparaison avec le résultat de l'exemple 6, la séparation entre les deux fractions α₁-globuline et albumine est nettement améliorée et le retour à la ligne de base est meilleur.

### Exemple 8 (comparatif)

On opère comme à l'exemple 6, le tampon utilisé étant un tampon borate 150 mM.

L'électrophorèse a été réalisée comme à l'exemple 6.

Comme cela apparaît sur la figure 8 l'électrophérogramme obtenu dans les mêmes conditions présente, de gauche à droite, six pics successifs attribués respectivement aux fractions γ, β, β₁, α₂, α₁-globuline et albumine.

### Exemple 9

Au tampon de l'exemple 8, on ajoute de l'octanesulfonate à une concentration de 2,5 mM.

L'électrophorèse a été réalisée comme à l'exemple 6.

Comme cela apparaît sur la figure 9, l'électrophérogramme obtenu dans les mêmes conditions présente, de gauche à droite, six pics successifs attribués respectivement aux fractions γ, β₂, β₁, α₂, α₁-globuline et albumine. La séparation entre les deux fractions α₁- et albumine est améliorée par un meilleur retour à la ligne de base. On observe que la fraction α₁ est composée de deux pics, dont l'un, qui correspond à l'orosomucoïde était, en l'absence d'octanesulfonate, confondu avec le pic de l'albumine.

### Exemple 10 (comparatif)

On obtient l'électrophérogramme de la figure 10 en analysant le même sérum qu'aux exemples 6 à 9 par la méthode B ci-dessus. Par comparaison avec le résultat obtenu aux exemples 7 et 9, on constate que ces modes de réalisation permettent d'obtenir une résolution pratiquement comparable à la résolution obtenue sur gel d'agarose.

### Exemple 11

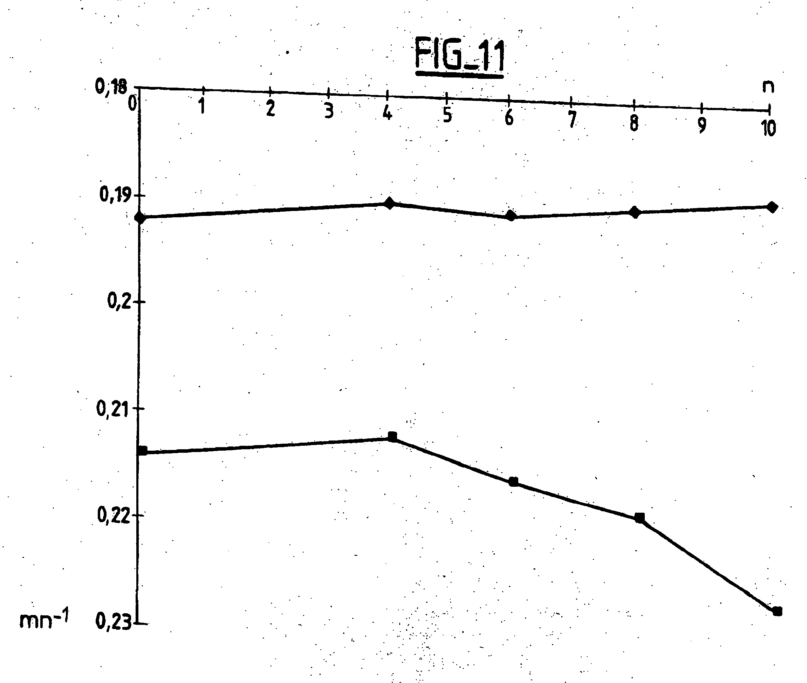

On a mesuré la mobilité (mn⁻¹) comparée de l'α₁-globuline et de l'albumine, dans un tampon borate (150 mM) à pH 10, par la méthode A ci-dessus. On a ajouté des alkylsulfonates de longueur (n) de chaîne alkyle croissante (n représente 4, 6, 8 et 10 respectivement pour C₄, C₆, C₈ et C₁₀ et n=0 correspond à un tampon sans alkylsulfonate) à une concentration de 2,5 mM au tampon borate. Les mobilités des fractions alpha-1 et albumine ont été calculées et reportées sur le graphique de la figure 11. On observe une nette diminution de la mobilité de l'albumine (■) par rapport à celle de la fraction alpha-1 (◆) à partir d'une chaîne en C6.

## Revendications

1. Procédé d'électrophorèse capillaire en solution libre à pH alcalin pour l'analyse d'échantillons biologiques comportant des constituants protéiques, **caractérisé en ce que** lés constituants sont l'albumine et les fractions α₁-, α₂-, β- ou (β₁- et β₂-) et γ-globuline et **en ce qu'**il comporte au moins une étape où :
on introduit l'échantillon dans un tube capillaire contenant un tampon d'analyse présentant un pH compris entre 9 et 11, ledit tampon d'analyse comportant en outre au moins un additif capable d'interaction hydrophobe avec un ou plusieurs constituants protéiques et capable d'apporter à ce ou ces constituants protéiques une ou plusieurs charges négatives et de diminuer la mobilité électrophorétique de l'albumine par rapport à celle des autres protéines, ledit additif comportant un pôle anionique quand le pH est supérieur à 9 et une partie hydrophobe.

2. Procédé selon la revendication 1, **caractérisé en ce qu'**il comporte en outre la séparation des constituants par migration et la détection de ces constituants.

3. Procédé selon la revendication 1 ou 2, **caractérisé en ce que** l'échantillon est un échantillon de sérum, du sang hémolysé, plasma, urine ou liquide céphalo-rachidien.

4. Procédé selon l'une des revendications 1 à 3, **caractérisé en ce que** les constituants sont des protéines sériques.

5. Procédé selon l'une des revendications 1 à 4, **caractérisé en ce que** ledit additif comporte une partie hydrophobe composée d'au moins une chaîne alkyle, ramifiée ou non, de 4 à 22 atomes de carbone, et/ou d'au moins une combinaison de 1 à 10 cycles, aromatiques ou non, et un pôle anionique constitué par un ou plusieurs groupes choisi(s) parmi les sulfonates, carboxylates, sulfates, phosphates et carbonates.

6. Procédé selon l'une des revendications 1 à 5, **caractérisé en ce que** ledit additif est choisi parmi les surfactants anioniques du type cholate, les C₆ à C₂₂-alkyl-mono-, di- ou tri-sulfonates, le tétradécènesulfonate, les naphtalènesulfonates, les C₆ à C₂₂-alkyl-mono-, di- ou tri-carboxylates, les C₆-C₂₂-alkylcarboxysulfonates, les naphtalènecarboxylates ; les C₄ à C₁₄-alkylsulfates, les C₄ à C₁₄-alkylcarbonates; les benzènesulfonates, les benzènecarboxylates et les tampons biologiques zwitterioniques.

7. Procédé selon l'une des revendications 1 à 6, **caractérisé en ce que** ledit additif est choisi parmi les surfactants anioniques du type cholate, les C₆ à C₂₂-alkyl-mono-, di- ou tri-sulfonates, le tétradécènesulfonate, les naphtalènesulfonates, les C₆ à C₂₂-alkyl-mono-, di- ou tri-carboxylates, les C₆-C₂₂-alkylcarboxysulfonates, les naphtalènecarboxylates, les C₄ à C₁₄-alkylsulfates, les C₄ à C₁₄-alkylcarbonates, les benzènesulfonates et les benzénecarboxylates.

8. Procédé selon l'une des revendications 5 à 7, **caractérisé en ce que** les radicaux alkyle sont linéaires.

9. Procédé selon l'une des revendications 1 à 8, **caractérisé en ce que** l'additif est un C₆ à C₁₀ alkylsulfonate.

10. Procédé selon l'une des revendications 1 à 9, **caractérisé en ce que** l'additif est l'octanesulfonate.

11. Procédé selon l'une des revendications 1 à 10, **caractérisé en ce que** la concentration en additif dans le tampon est comprise entre 0,1 mM et 500 mM, sans excéder le cas échéant la concentration micellaire critique dudit additif dans ledit tampon.

12. Procédé selon l'une des revendications 1 à 11, **caractérisé en ce que** la concentration dudit additif dans ledit tampon est comprise entre 1 mM et 5 mM.

13. Procédé selon l'une des revendications 1 à 12, **caractérisé en ce que** la concentration d'additif dans le tampon est de l'ordre de 2,5 mM.

14. Procédé selon l'une des revendications 1 à 13, **caractérisé en ce que** le capillaire est en silice fondue.

15. Procédé selon l'une des revendications 1 à 14, **caractérisé en ce que** le tampon d'analyse comprend en outre au moins un modificateur de pH.

16. Procédé selon la revendication 15, **caractérisé en ce que** le modificateur de pH est choisi parmi l'hydroxyde de lithium, l'hydroxyde de sodium, l'hydroxyde de potassium, l'hydroxyde de rubidium, l'hydroxyde de césium, l'hydroxyde de francium, un hydroxyde de mono-, di-, tri- ou tétra-alkyl ammonium de 1 à 8 atomes de carbone dans la partie alkyle.

17. Procédé selon l'une des revendications 1 à 16, **caractérisé en ce que** le tampon d'analyse comporte en outre du sulfate de sodium.

18. Composition d'électrolyte pour électrophorèse capillaire adapté pour la mise en oeuvre du procédé selon l'une des revendications 1 à 17, comportant au moins un tampon et au moins un additif dans un support acceptable, l'additif étant capable d'interaction hydrophobe avec l'albumine, ledit additif, comportant un pôle anionique quand le pH est supérieur à 9 et une partie hydrophobe, étant choisi parmi les surfactants anioniques du type cholate, les C₆ à C₂₂-alkyl-mono, di- ou tri-sulfonates, le tétradécènesulfonate, les naphatalènesulfonates, les C₆ à C₂₂-alkyl-mono-, di- ou tri-carboxylates, les C₆-C₂₂-alkyl carboxysulfonates, les naphatalènecarboxylates, les C₄ à C₁₄-alkylsufates, les C₄ à C₁₄-alkylcarbonates, les benzènesulfonates et les benzènecarboxylatesle pH de ladite composition étant compris entre 9 et 11.

19. Composition selon la revendication 18, **caractérisée en ce que** les radicaux alkyle sont linéaires.

20. Composition selon la revendication 18 ou 19, **caractérisée en ce que** l'additif est un C₆ à C₁₀-alkylsulfonate.

21. Composition selon l'une des revendications 18 à 20, **caractérisée en ce que** l'additif est l'octanesulfonate

22. Composition selon l'une des revendications 18 à 21, **caractérisée en**
**ce que** l'octane sulfonate est présent à une concentration de 1 à 5 mM dans le tampon.

23. Composition selon l'une des revendications 18 à 22, **caractérisée en ce que** la composition comporte en outre du sulfate de sodium.

## Patentansprüche

1. Kapillarelektrophoretisches Verfahren in freier Lösung bei alkalischem pH zur Analyse von biologischen Proben, die Proteinkomponenten umfassen,
**dadurch gekennzeichnet, dass** die Komponenten Albumin und die Fraktionen α₁, α₂-, β- oder (β₁- und β₂-) und γ-Globulin beinhalten und dadurch, dass es mindestens einen Schritt umfasst, in dem:
die Probe in ein Kapillarröhrchen eingebracht wird, das einen Analysepuffer enthält, der einen pH zwischen 9 und 11 aufweist, wobei der Analysepuffer weiter mindestens ein Additiv umfasst, das zur hydrophoben Wechselwirkung mit einer oder mehreren Proteinkomponenten geeignet ist und dazu geeignet ist, der einen oder den mehreren Proteinkomponenten eine oder mehrere negative Ladungen zu vermitteln und die elektrophoretische Mobilität des Albumins gegenüber der der anderen Proteine zu verringern, wobei das Additiv einen anionischen Bereich umfasst, wenn der pH über 9 beträgt, und einen hydrophoben Teil umfasst.

2. Verfahren nach Anspruch 1, **dadurch gekennzeichnet, dass** es weiter die Abtrennung der Komponenten durch Migration und den Nachweis dieser Komponenten umfasst.

3. Verfahren nach Anspruch 1 oder 2, **dadurch gekennzeichnet, dass** die Probe eine Probe von Serum, hämolysiertem Blut, Plasma, Urin oder Cerebrospinalflüssigkeit ist.

4. Verfahren nach einem der Ansprüche 1 bis 3, **dadurch gekennzeichnet, dass** die Komponenten Serumproteine sind.

5. Verfahren nach einem der Ansprüche 1 bis 4, **dadurch gekennzeichnet, dass** das Additiv einen hydrophoben Teil, der aus mindestens einer verzweigten oder unverzweigten Alkylkette mit 4 bis 22 Kohlenstoffatomen und/oder mindestens einer Verbindung aus 1 bis 10 aromatischen oder nichtaromatischen Ringen gebildet ist, und einen anionischen Bereich, der von einer oder mehreren Gruppen ausgewählt aus Sulfonaten, Carboxylaten, Sulfaten, Phosphaten und Carbonaten gebildet ist, umfasst.

6. Verfahren nach einem der Ansprüche 1 bis 5, **dadurch gekennzeichnet, dass** das Additiv ausgewählt ist aus anionischen oberflächenaktiven Stoffen vom Typ Cholate, C₆- bis C₂₂-Alkylmono-, -di- oder -trisulfonate, Tetradecensulfonat, Naphthalensulfonate, C₆- bis C₂₂-Alkylmono-, -di- oder -tricarboxylate, C₆- bis C₂₂-Alkylcarboxysulfonate, Naphthalencarboxylate, C₄- bis C₁₄-Alkylsulfate, C₄- bis C₁₄-Alkylcarbonate, Benzolsulfonate, Benzolcarboxylate und zwitterionische biologische Puffer.

7. Verfahren nach einem der Ansprüche 1 bis 6, **dadurch gekennzeichnet, dass** das Additiv ausgewählt ist aus anionischen oberflächenaktiven Stoffen vom Typ Cholate, C₆- bis C₂₂-Alkylmono-, -di- oder -trisulfonate, Tetradecensulfonat, Naphthalensulfonate, C₆- bis C₂₂-Alkylmono-, -di- oder -tricarboxylate, C₆- bis C₂₂-Alkylcarboxysulfonate, Naphthalencarboxylate, C₄- bis C₁₄-Alkylsulfate, C₄- bis C₁₄-Alkylcarbonate, Benzolsulfonate und Benzolcarboxylate.

8. Verfahren nach einem der Ansprüche 5 bis 7, **dadurch gekennzeichnet, dass** die Alkylradikale linear sind.

9. Verfahren nach einem der Ansprüche 1 bis 8, **dadurch gekennzeichnet, dass** das Additiv ein C₆- bis C₁₀-Alkylsulfonat ist.

10. Verfahren nach einem der Ansprüche 1 bis 9, **dadurch gekennzeichnet, dass** das Additiv Octansulfonat ist.

11. Verfahren nach einem der Ansprüche 1 bis 10, **dadurch gekennzeichnet, dass** die Konzentration an Additiv im Puffer zwischen 0,1 mM und 500 mM liegt, gegebenenfalls ohne die kritische Mizellkonzentration des Additivs im Puffer zu überschreiten.

12. Verfahren nach einem der Ansprüche 1 bis 11, **dadurch gekennzeichnet, dass** die Konzentration des Additivs im Puffer zwischen 1 mM und 5 mM liegt.

13. Verfahren nach einem der Ansprüche 1 bis 12, **dadurch gekennzeichnet, dass** die Konzentration an Additiv im Puffer in der Größenordnung von 2,5 mM liegt.

14. Verfahren nach einem der Ansprüche 1 bis 13, **dadurch gekennzeichnet, dass** die Kapillare aus pyrogenem Siliciumoxid gebildet ist.

15. Verfahren nach einem der Ansprüche 1 bis 14, **dadurch gekennzeichnet, dass** der Analysepuffer weiter mindestens ein pH-Einstellmittel umfasst.

16. Verfahren nach Anspruch 15, **dadurch gekennzeichnet, dass** das pH-Einstellmittel ausgewählt ist aus Lithiumhydroxid, Natriumhydroxid, Kaliumhydroxid, Rubidiumhydroxid, Cäsiumhydroxid, Franciumhydroxid, Mono-, Di-, Tri- oder Tetraalkylammoniumhydroxid mit 1 bis 8 Kohlenstoffatomen im Alkylrest.

17. Verfahren nach einem der Ansprüche 1 bis 16, **dadurch gekennzeichnet, dass** der Analysepuffer weiter Natriumsulfat umfasst.

18. Elektrolytzusammensetzung zur Kapillarelektrophorese, die ausgebildet ist zur Ausführung des Verfahrens nach einem der Ansprüche 1 bis 17, umfassend mindestens einen Puffer und mindestens ein Additiv in einem akzeptablen Träger, wobei das Additiv zur hydrophoben Wechselwirkung mit Albumin geeignet ist, wobei das Additiv, das einen anionischen Bereich umfasst, wenn der pH über 9 beträgt, und einen hydrophoben Teil umfasst, ausgewählt ist aus anionischen oberflächenaktiven Stoffen vom Typ Cholate, C₆- bis C₂₂-Alkylmono-, -di- oder -trisulfonate, Tetradecensulfonat, Naphthalensulfonate, C₆- bis C₂₂-Alkylmono-, -di- oder-tricarboxylate, C₆- bis C₂₂-Alkylcarboxysulfonate, Naphthalencarboxylate, C₄- bis C₁₄-Alkylsulfate, C₄- bis C₁₄-Alkylcarbonate, Benzolsulfonate und Benzolcarboxylate, wobei der pH der Zusammensetzung zwischen 9 und 11 liegt.

19. Zusammensetzung nach Anspruch 18, **dadurch gekennzeichnet, dass** die Alkylradikale linear sind.

20. Zusammensetzung nach Anspruch 18 oder 19, **dadurch gekennzeichnet, dass** das Additiv ein C₆- bis C₁₀-Alkylsulfonat ist.

21. Zusammensetzung nach einem der Ansprüche 18 bis 20, **dadurch gekennzeichnet, dass** das Additiv Octansulfonat ist.

22. Zusammensetzung nach einem der Ansprüche 18 bis 21, **dadurch gekennzeichnet, dass** das Octansulfonat in einer Konzentration von 1 bis 5 mM im Puffer vorhanden ist.

23. Zusammensetzung nach einem der Ansprüche 18 bis 22, **dadurch gekennzeichnet, dass** die Zusammensetzung weiter Natriumsulfat umfasst.

## Claims

1. Method of free solution capillary electrophoresis at an alkaline pH for analysing biological samples comprising protein constituents, **characterized in that** the constituents are albumin and the α₁-, α₂-, β- or (β₁- and β₂-) and γ- globulin fractions and **in that** it comprises at least one step in which:
the sample is introduced into a capillary tube containing an analysis buffer with a pH in the range 9 to 11, said analysis buffer further comprising at least one additive which is capable of hydrophobic interaction with one or more protein constituents and which is capable of providing said protein constituent or constituents with one or more negative charges and of reducing the electrophoretic mobility of the albumin compared with that of the other proteins, said additive comprising an anionic pole when the pH is greater than 9 and a hydrophobic portion.

2. The method as claimed in claim 1, **characterized in that** it further comprises separating the constituents by migrating and detecting these constituents.

3. The method as claimed in claim 1 or claim 2, **characterized in that** the sample is a sample of serum, haemolysed blood, plasma, urine or cerebro-spinal fluid.

4. The method as claimed in one of claims 1 to 3, **characterized in that** the constituents are blood proteins.

5. The method as claimed in one of claims 1 to 4, **characterized in that** said additive comprises a hydrophobic portion composed of at least one linear or non-linear alkyl chain containing 4 to 22 carbon atoms, and/or at least a combination of 1 to 10 cycles, which may or may not be aromatic, and an anionic pole constituted by one or more groups selected from sulphonates, carboxylates, sulphates, phosphates and carbonates.

6. The method as claimed in one of claims 1 to 5, **characterized in that** said additive is selected from anionic surfactants of the cholate type, C₆ to C₂₂ alkyl mono-, di- or tri-sulphonates, tetradecenesulphonate, naphthalenesulphonates, C₆ to C₂₂ alkyl mono-, di- or tri-carboxylates, C₆-C₂₂ alkylcarboxysulphonates, naphthalenecarboxylates, C₄ to C₁₄ alkylsulphates, C₄ to C₁₄ alkylcarbonates; benzenesulphonates, benzenecarboxylates and zwitterionic biological buffers.

7. The method as claimed in one of claims 1 to 6, **characterized in that** said additive is selected from anionic surfactants of the cholate type, C₆ to C₂₂ alkyl mono-, di- or tri-sulphonates, tetradecenesulphonate, naphthalenesulphonates, C₆ to C₂₂ alkyl mono-, di- or tri- carboxylates, C₆-C₂₂ alkylcarboxysulphonates, naphthalenecarboxylates, C₄ to C₁₄ alkylsulphates, C₄ to C₁₄ alkylcarbonates, benzenesulphonates and benzenecarboxylates.

8. The method as claimed in one of claims 5 to 7, **characterized in that** the alkyl radicals are linear.

9. The method as claimed in one of claims 1 to 8, **characterized in that** the additive is a C₆ to C₁₀ alkylsulphonate.

10. The method as claimed in one of claims 1 to 9, **characterized in that** the additive is octanesulphonate.

11. The method as claimed in one of claims 1 to 10, **characterized in that** the concentration of additive in the buffer is in the range 0.1 mM to 500 mM, if appropriate not exceeding the critical micellar concentration of said additive in said buffer.

12. The method as claimed in one of claims 1 to 11, **characterized in that** the concentration of said additive in said buffer is in the range 1 mM to 5 mM.

13. The method as claimed in one of claims 1 to 12, **characterized in that** the concentration of additive in the buffer is of the order of 2.5 mM.

14. The method as claimed in one of claims 1 to 13, **characterized in that** the capillary ismade of fused silica.

15. The method as claimed in one of claims 1 to 14, **characterized in that** the buffer system further comprises at least one pH-modifying agent.

16. The method as claimed in claim 15, **characterized in that** the pH-modifying agent is selected from lithium hydroxide, sodium hydroxide, potassium hydroxide, rubidium hydroxide, caesium hydroxide, francium hydroxide, or a mono-, di-, tri- or tetra-alkyl ammonium hydroxide containing 1 to 8 carbon atoms in the alkyl portion.

17. The method as claimed in one of claims 1 to 16, **characterized in that** the buffer system further comprises sodium sulphate.

18. An electrolyte composition for capillary electrophoresis suitable for carrying out the method as claimed in one of claims 1 to 17, comprising at least one buffer and at least one additive in an acceptable support, the additive being capable of hydrophobic interaction with albumin, said additive, comprising an anionic pole when the pH is greater than 9 and a hydrophobic portion, being selected from anionic surfactants of the cholate type, C₆ to C₂₂ alkyl mono-, di- or tri-sulphonates, tetradecenesulphonate, naphthalenesulphonates, C₆ to C₂₂ alkyl mono-, di- or tri- carboxylates, C₆-C₂₂ alkylcarboxysulphonates, naphthalenecarboxylates, C₄ to C₁₄ alkylsulphates, C₄ to C₁₄ alkylcarbonates, benzenesulphonates and benzenecarboxylates, the pH of said composition being in the range 9 to 11.

19. The composition as claimed in claim 18, **characterized in that** the alkyl radicals are linear.

20. The composition as claimed in claim 18 or claim 19, **characterized in that** the additive is a C₆ to C₁₀ alkylsulphonate.

21. The composition as claimed in one of claims 18 to 20, **characterized in that** the additive is octanesulphonate.

22. The composition as claimed in one of claims 18 to 21, **characterized in that** the octanesulphonate is present in a concentration of 1 to 5 mM in the buffer.

23. The composition as claimed in one of claims 18 to 22, **characterized in that** the composition further comprises sodium sulphate.
